# EUROPEAN PATENT SPECIFICATION

(11) **EP 0 432 676 B1**
(45) Date of publication and mention of the grant of the patent: **22.05.1996**
(21) Application number: 90123669.5
(22) Date of filing: 09.12.1990
(51) Int. Cl.: H04N 7/16

(54) **Descrambling accessory for television signal receiver**
Entwürfelungszubehör für einen Fernsehsignalempfänger
Dispositif auxiliaire de débrouillage pour un télérécepteur

(30) Priority: 13.12.1989 IT 6808989
(43) Date of publication of application: 19.06.1991
(73) Proprietor: EDICO S.r.l., I-00197 Roma (IT)
(72) Inventor: Zappala, Giuseppe, Dr., IT-10128 Torino (IT)
(74) Representative: Eisenführ, Speiser & Partner

(56) References cited:
- EP-A- 0 120 615
- FR-A- 2 591 838
- GB-A- 2 215 928
- US-A- 4 509 210
- PATENT ABSTRACTS OF JAPAN vol. 11, no. 245 (E-531) 11 August 1987, & JP-A-62 058 791
- Alles über Fernsehen, Video, Satellit; Dittel et. al.; Köln; vgs, 1989; pages 259 - 261

## Description

The present invention refers to an accessory for a television receiver provided with a peritelevision socket, where, in order to allow the receiver to reproduce correctly a television signal which is descrambled so that it cannot be reproduced correctly by television receivers not provided with a suitable decoder.

In US-A-4,509,210 it is described a television receiver adapted for use of a plug-in descrambler which is coupled to the receiver by a standard connector. The connector is accessible from the exterior of the housing of the receiver without significant disassembly. The connector has terminals electrically coupled to various key points in the receiver. Each type of descrambler is adapted for descrambling a particular type of scrambled signal, and for that purpose uses certain of the connector terminals. The plug-in descrambler also selects the operating frequency characteristics of the tuner.

From FR-A2-2 591 838 it is known a modification of a peritelevision socket, so that it can be adapted to a receiver, not provided with a peri television socket; this document states that such socket maybe usefull also for connection with a decoder.

It is known that there are in use systems for distributing television programmes against payment, wherein the programmes are for instance distributed by cable, and the television signal is submitted at the transmission side to a coding (scrambling) procedure, so that the signal characteristics are changed; in order to receive satisfactorily said signals a receiver is needed, provided with a suitable unscrambling device (decoder), which restitutes to the signal the original characteristics, in order to allow a satisfactory reproduction both visual and acoustic thereof.

The decoder may be contained in the receiver and in this case the cost thereof is unnecessarily increased, in case such scrambled transmissions are either not available or not desired.

The decoder may be sold or hired as an accessory for the receiver: in this case it is either necessary to modify the receiver, what represents an inconvenience, in order to connect the accessory thereto, or the accessory must provide for demodulating, unscrambling and modulating again the received signal, in order to supply it to the antenna input terminal of the receiver. The latter solution, besides a cost increase, means also a deterioration of the picture quality.

The object of the present invention is that of indicating an accessory for a television signal receiver capable of avoiding the said drawbacks, also being more flexible and satisfactory for the user.

In order to a achieve the said object it is proposed according to the present invention an accessory for a television signal receiver provided with a peritelevision socket, where, in order to allow the receiver to reproduce correctly a television signal which is scrambled so that it cannot be reproduced correctly by television receivers not provided with a suitable decoder, the accessory is characterized in that it comprises the necessary descrambling decoder; a peritelevision plug, connectable to said peritelevision socket of the receiver, through which it provides the receiver, with a descrambled video signal; and an additional video output, and switching means for selecting in response to a control signal generated by said descrambling decoder as an output signal at this output either the video signal coming from a normal television transmission or a descrambled video signal coming from a descrambled video signal coming from a scrambled transmission.

Characteristics and advantages of the present invention will be clear from the following detailed description and the attached drawings, which are of course given as an explanatory non-limiting example only, where:

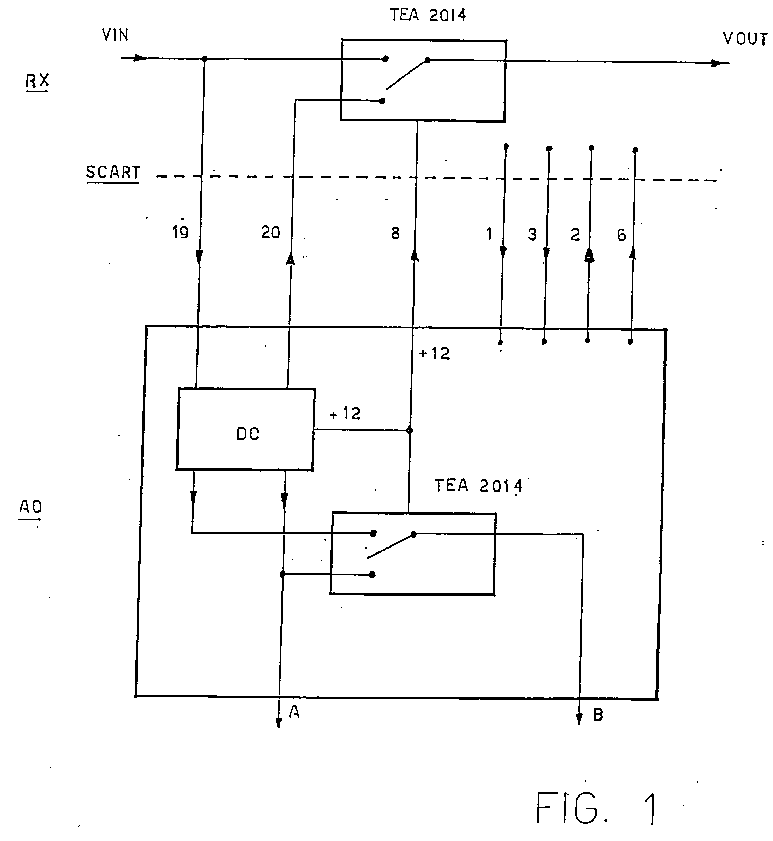

figure 1 schematically shows the accessory according to the invention connected to the so called peritelevision input socket (SCART) of a television signal receiver.

In fig. 1, there is schematically shown, as an example, the connection of an accessory according to the invention to the so called peritelevision input socket (SCART socket) of a television signal receiver; the figure is divided in two parts, a upper one and a lower one, by an horizontal dotted line, marked with the word SCART.

In the upper part of the figure there is schematically shown a small portion of the normal television receiver, indicated on the left side with the symbol RX; the symbol VIN indicates a point where there is available the demodulated television video signal, which may be scrambled; the symbol VOUT shows a point where there is available the unscrambled video signal; between the said two points there is inserted a known video signal switching device, for instance an integrated circuit of the type TEA 2014.

The SCART socket is shown having 7 terminals (i.e. the terminals which relate to the part of the circuitry concerning the invention) and more precisely:
terminal 19 (video output from the television receiver, input to the accessory);
terminal 20 (video input to the television receiver, output from the accessory):
terminal 8 (control voltage input to the television receiver, output from the accessory);
terminal 1 (audio signal output from the television receiver, input to the accessory);
terminal 3 (audio signal output from the television receiver, input to the accessory);
terminal 2 (audio signal input to the television receiver, output from the accessory);
terminal 6 (audio signal input to the television receiver, output from the accessory).

In the lower part of the figure there is schematically shown a portion of the circuit of the accessory according to the invention, which is indicated on the left side with the symbol AO; the symbol DC indicates the decoder; it comprises an identificator, which is capable of recognizing a scrambled signal from a normal one; it comprises also the decoding circuit itself; and a control signal generator.

If the video signal at the pin 19 of the SCART socket is a normal one, block DC generates a command signal of zero volts and sends it to the pin 8 of the same socket; as a consequence the video switch of the TEA 2014 directly connects points VIN and VOUT, so that a normal video signal is forwarded to the receiver in order to be processed and displayed normally.

If the video signal at the pin 19 of the SCART socket is a scrambled one, block DC decodes it and sends it to the pin 20 of the SCART socket; moreover block DC generates a command signal of 12 volts and sends it to the pin 8 of the said socket; as a consequence the video switch of the TEA 2014 connects the pin 20 to the point VOUT, so that the unscrambled video signal at the pin 20 is forwarded to the receiver in order to be processed and displayed normally.

The accessory provides also for two video outputs (possibly only one capable of being manually switched); at one (A) of them there is available only the unscrambled (decoded) video signal of a scrambled transmission and at the other (B) there is available either the video signal coming from a normal television transmission or the video signal coming from a scrambled transmission; this characteristic is obtained by means a second video switch, similar to that contained in the television receiver (e.g. a TEA 2014); it is connected as shown in the figure and it is controlled by the same control voltage produced by the block DC.

The control signal coming from block DC, which is zero volts when a scrambled signal is not received and 12 volts when a scrambled signal is received, may be directly used to control a videorecorder or another similar apparatus, for instance if there is the need to record a transmission, particularly a scrambled one, wherein there are inserted not scrambled advertising programs, which have not to be recorded.

The accessory AO also provides for receiving from pins 1 and 3 of the SCART socket an audio signal coming from the television receiver and for sending to the receiver an audio signal, possibly modified, through pins 2 and 6 of the same SCART socket. In this way it is also possible to identify a cyphering key inserted in the audio signal, alone or in combination with the key inserted in the video signal, so that it is possible to perform, if necessary, the identification and decoding of both the video and the audio signals.

The characteristics of the described device are clear from the description given and from the attached drawings.

Also clear are the advantages of the described accessory according to the present invention.

In particular they are represented by the fact that the user needs only to connect the accessory to the receiver through the peritelevision socket (SCART socket) in order to be able to receive and watch automatically and indifferently both the normal and the scrambled programmes.

## Claims

1. Accessory (AO) for a television signal receiver (RX) provided with a peritelevision socket, where, in order to allow the receiver (RX) to reproduce correctly a television signal which is scrambled so that it cannot be reproduced correctly by television receivers not provided with a suitable decoder, the accessory (AO) is characterized in
that it comprises
- the necessary descrambling decoder (DC);
- a peritelevision plug, connectable to said peritelevision socket of the receiver, through which it provides the receiver (RX), with a descrambled video signal (20); and
- an additional video output (B), and switching means (TEA 2014) for selecting in response to a control signal generated by said descrambling decoder (DC) as an output signal at this output either the video signal coming from a normal television transmission or a descrambled video signal coming from a scrambled transmission.

2. Accessory for a television receiver, according to claim 1, characterized in that said receiver (RX) is capable of receiving and displaying both normal television signals and said scrambled television signals, without any manual switching.

3. Accessory for a television receiver, according to claim 1, characterized in that the accessory (AO) receives the video signal from the receiver (RX) and comprises a circuit (DC) which identifies the signal type and generates a control signal assuming two values (0-12 V.) according to the fact that the received signal is a normal one or a scrambled one.

4. Accessory for a television receiver, according to claim 1, characterized in that the accessory (AO) is provided for receiving and examining also the audio signal received from the receiver.

5. Accessory for a television receiver, according to claim 3, characterized in that said control signal (0-12 V.) is apt to be used to control a videorecorder.

6. Accessory for a television receiver, according to claim 3, characterized in that said control signal (0-12 V.) is used to automatically adapt the receiver (RX) to the reception of the incoming signal.

## Patentansprüche

1. Zusatzeinrichtung (AO) für einen mit einer Peritelevisions-Buchse versehenen Fernsehsignalempfänger (RX), wobei, um dem Empfänger (RX) zu ermöglichen, ein Fernsehsignal korrekt wiederzugeben, welches kodiert ist, so daß es durch Fernsehempfänger, welche nicht mit einem geeigneten Dekodierer ausgestattet sind, nicht korrekt wiedergegeben werden kann, die Zusatzeinrichtung (AO)
gekennzeichnet ist durch
- den erforderlichen Dekodierer (DC);
- einen Peritelevisions-Stecker, welcher an die Peritelevisions-Buchse des Empfängers anschließbar ist, durch welche er den Empfänger (RX) mit einem dekodierten Videosignal (20) versorgt; und
- einen zusätzlichen Videoausgang (B), eine Umschalteinrichtung (TEA 2014) zum Selektieren entweder des von einer normalen Fernsehübertragung kommenden Videosignals oder eines von einer kodierten Übertragung kommenden dekodierten Videosignals als Reaktion auf ein durch den Dekodierer (DC) als ein Ausgangssignal an diesem Ausgang erzeugtes Steuerungssignal.

2. Zusatzeinrichtung für einen Fernsehempfänger nach Anspruch 1, dadurch gekennzeichnet, daß der Empfänger (RX) in der Lage ist, normale Fernsehsignale und die kodierten Fernsehsignale ohne eine manuelle Umschaltung zu empfangen und anzuzeigen.

3. Zusatzeinrichtung für einen Fernsehempfänger nach Anspruch 1, dadurch gekennzeichnet, daß die Zusatzeinrichtung (AO) das Videosignal von dem Empfänger (RX) empfängt und eine Schaltung (DC) umfaßt, welche den Signaltyp identifiziert und ein Steuerungssignal erzeugt, welches zwei Werte (0 - 12 V) entsprechend der Tatsache, daß das empfangene Signal ein normales oder ein kodiertes ist, annimmt.

4. Zusatzeinrichtung für einen Fernsehempfänger nach Anspruch 1, dadurch gekennzeichnet, daß die Zusatzeinrichtung (AO) auch zum Empfangen und Prüfen des von dem Empfänger empfangenen Audiosignals vorgesehen ist.

5. Zusatzeinrichtung für einen Fernsehempfänger nach Anspruch 3, dadurch gekennzeichnet, daß das Steuerungssignal (0 - 12 V) geeignet ist, um zum Steuern eines Videorecorders verwendet zu werden.

6. Zusatzeinrichtung für einen Fernsehempfänger nach Anspruch 3, dadurch gekennzeichnet, daß das Steuerungssignal (0 - 12 V) verwendet wird, um den Empfänger (RX) automatisch an den Empfang des ankommenden Signals anzupassen.

## Revendications

1. Dispositif auxiliaire (AO) pour un récepteur de télévision (RX) équipé d'une prise péritel, dans lequel, afin que le récepteur (RX) puisse reproduire correctement un signal de télévision qui est crypté afin de ne pas pouvoir être reproduit correctement par des récepteurs de télévision non équipés d'un décodeur approprié, le dispositif auxiliaire (AO) est caractérisé en ce qu'il comprend
- le décodeur de décryptage nécessaire (DC) ;
- une fiche péritel qui peut être connectée à ladite prise péritel du récepteur, par laquelle il délivre au récepteur (RX) un signal vidéo décrypté (20) ; et
- une sortie vidéo supplémentaire (B) et des moyens de commutation (TEA 2014) pour sélectionner, en réponse à un signal de contrôle généré par ledit décodeur de décryptage (DC) en tant que signal de sortie à cette sortie, soit le signal vidéo provenant d'une transmission de télévision normale soit un signal vidéo décrypté provenant d'une transmission cryptée.

2. Dispositif auxiliaire pour un récepteur de télévision selon la revendication 1, caractérisé en ce que ledit récepteur (RX) est capable de recevoir et d'afficher à la fois des signaux de télévision normaux et lesdits signaux de télévision cryptés, sans commutation manuelle.

3. Dispositif auxiliaire pour un récepteur de télévision selon la revendication 1, caractérisé en ce que le dispositif auxiliaire (AO) reçoit le signal vidéo du récepteur (RX) et comprend un circuit (DC) qui identifie le type de signal et génère un signal de contrôle pouvant prendre deux valeurs (0-12V) selon que le signal reçu est un signal normal ou un signal crypté.

4. Dispositif auxiliaire pour un récepteur de télévision selon la revendication 1, caractérisé en ce que le dispositif auxiliaire (AO) est prévu pour recevoir et examiner également le signal audio provenant du récepteur.

5. Dispositif auxiliaire pour un récepteur de télévision selon la revendication 3, caractérisé en ce que ledit signal de contrôle (0-12V) peut être utilisé pour contrôler un magnétoscope.

6. Dispositif auxiliaire pour un récepteur de télévision selon la revendication 3, caractérisé en ce que ledit signal de contrôle (0-12V) est utilisé pour adapter automatiquement le récepteur (RX) à la réception du signal entrant.
